# EUROPEAN PATENT APPLICATION

(11) **EP 2 380 857 A1**
(43) Date of publication of application: **26.10.2011**
(21) Application number: 10160804.0
(22) Date of filing: 22.04.2010
(51) Int. Cl.: C03C 13/00, F16D 69/02

(54) **Friction material comprising chopped continuous mineral fibres**

(71) Applicant: Rockwool International A/S, 2640 Hedehusene (DK)
(72) Inventor: Smeets, Luc, 6049 DX Herten (NL); van de Worp, Bart, 6137 JW Sittard (NL)
(74) Representative: Barz, Peter

(57) **Abstract**

A friction material comprises chopped continuous mineral fibres as reinforcing fibers wherein the mineral fibres are man-made vitreous fibres and the composition of the mineral fibres comprises the following components, based on the total weight of the composition: 54.0 to 64.0 % by weight of SiO₂; 9.0 to 27.0 % by weight of Al₂O₃; 10.0 to 29.0 % by weight of CaO + MgO; 0 to 4.0 % by weight of Na₂O + K₂O; 0 to less than 2 % by weight of B₂O₃.

The friction material comprising said chopped continuous mineral fibres exhibits reduced noise in service and an improved wear performance. A particular suitable application of the friction material is a disk pad or brake pad.

## Description

The present invention relates to a friction material comprising chopped continuous mineral fibres as reinforcing fibers, and to the use of chopped continuous mineral fibres in friction materials

Friction materials are widely used in a variety of applications. For instance, friction materials are required for brake or clutch devices and they are used e.g. in the form of brake pads, disk pads, brake shoes, brake linings, and clutch facings. Examples of suitable application fields are industrial machines and transport systems or vehicles such as lifts, passenger cars, motorcycles, bicycles, trucks, railway vehicles, aircrafts, baggage cars and cable cars.

The composition of friction materials may vary with respect to constituents used and the relative amounts thereof, depending on the desired properties of the friction material and the friction material system employed. Classifications of friction material systems are e.g. metallic, semi-metallic, low-steel, non-asbestos organic, NAO/non-steel (also called "ceramic") friction materials. Usually however the following components are contained in a friction material formulation: a) a binding agent (matrix forming component), b) reinforcing fibres, c) fillers, and d) frictional additives such as abrasives and lubricants.

It is known to use glass fibres in friction materials. For instance, US 4303446 relates to the use of a fibrous glass having a relatively high content of potassium oxide in a friction material. US 6571449 B2 mentions the use of glass fibers in friction linings. US 2002/0034623 A1 describes the use of a soluble amorphous substance in a non-asbestos friction material. The soluble amorphous substance is preferably fibrous or granular. EP 0409495 A1 relates to a friction material comprising a binder which contains a blend of polyvinyl alkyl ether, a curable phenolic resin and optionally a rubber. The friction material may include fibrous materials such as glass fibres. US 4403047 describes the use of a soft fibrous glass containing a relatively high content of potassium oxide and having a Moh's hardness of less than about 5 for asbestosfree friction materials.

US 4324706 relates to a friction material having superior heat-resistance and wearresistance comprising a fibrous material selected from the group consisting of inorganic fibrous materials such as glass fibres and heat-resistant organic fibrous materials. WO 2008/065363 describes the use of potassium aluminosilicate fibers for several applications such as friction materials.

While the general use of glass fibres in friction materials is known for several purposes, the noise generation performance of such friction materials is generally not satisfactory. Also other properties such as wear performance are amendable.

When friction materials are in service, frequently the problem arises that noise development occurs. Since such noise development is usually undesirable, a need was felt in industry for friction materials exhibiting a reduced noise development in service. Known noise suppressors are mica, vermiculite, cashew dust, and rubber dust which are used as fillers in friction materials (see e.g.: D. Chan, G.W. Stachowiak, Review of automotive brake friction materials, Proc. lnstn Mech. Engrs Vol. 218 Part D: J. Automobile Engineering, p. 953-966).

A friction material with reduced noise refers to the noise generated when the friction material is in service. The characteristics of a friction material play an important role for the NVH of a vehicle. NVH is an acronym for "Noise Vibration Harshness" and is a measure of vehicle "feel" which is a combined measure of (1) the noise level in the vehicle during driving; (2) the vibration that can be felt by the customer during driving, and (3) the harshness of the vehicle ride during abrupt transitions in vehicle motion.

Glass fibres made of E-glass are commonly used glass fibres. Typical E-glasses are alumina-calcium-borosilicate glasses having a maximum alkali content of 2% w/w. The softening point of common E-glasses ranges from about 830 to 860°C.

EP 1451117 B1 discloses continuous glass fibres with improved thermal resistance and shrinkage behaviour having the following composition, in % by weight and based on the total composition: SiO₂: 56 to 62; Al₂O₃: 11 to 20; CaO: 20 to 24.5; MgO: 0.2 to 1.0; Na₂O: 0.05 to 2.0; K₂O 0 to 2.0, TiO₂: 1.5 to 4.0; Fe₂O₃: 0.11 to 0.3; SO₃: 0.01 to 0.05. The continuous glass fibres are said to be suitable as a filler for exhaust silencers.

WO 96/39362 relates to glass fibers having improved fiberizing properties and other properties and have the following composition, in % by weight based on the total composition: SiO₂: 59.0 to 62.0; Al₂O₃: 12.0 to 15.0; CaO: 20.0 to 24.0; MgO: 1.0 to 4.0; F₂: 0 to 0.5; Na₂O: 0.1 to 2.0; K₂O: 0 to 2.0, TiO₂: 0 to 0.9; Fe₂O₃: 0 to 0.5; SO₃: 0 to 0.5. The glass fibres are suitable for textile applications and reinforcements.

US 2008/0125304 A1 is concerned with glass reinforcement strands having improved properties in terms of mechanical strength, acid resistance and high-temperature resistance for a low-cost composition.

The object of the present invention was to provide friction materials having an improved reduced noise development when in service. At the same time, mechanical properties, wear performance and friction level should be at least maintained.

This object could be surprisingly achieved by a friction material comprising chopped continuous mineral fibres as reinforcing fibers wherein the mineral fibres are man-made vitreous fibres and the composition of the mineral fibres comprises the following components, based on the total weight of the composition: 54.0 to 64.0 % by weight of SiO₂; 9.0 to 27.0 % by weight of Al₂O₃; 10.0 to 29.0 % by weight of CaO + MgO; 0 to 4.0 % by weight of Na₂O + K₂O; 0 to less than 2 % by weight of B₂O₃.

The friction materials according to the present invention comprising said chopped continuous mineral fibres unexpectedly exhibit a reduction in noise associated with the use of the friction materials. Moreover, the friction materials of the invention show an improved wear performance and the corrosiveness of the friction material is also reduced. The invention is described in more detail in the following.

According to the present invention, the friction material includes chopped continuous mineral fibres. Mineral fibres are known in the art and widely used, for instance in insulation products or for reinforcement purposes. Chopped continuous mineral fibres can be prepared according to known procedures, e.g. drawing processes, blowing processes or combinations thereof (cf. e.g. Ullmanns Encyklopädie der technischen Chemie, 4th edition, vol. 11, p. 365 to 370, Verlag Chemie 1976). In these procedures a mineral melt is transformed into continuous fibres which are then chopped in a conventional manner according to the requirements. Such chopped continuous mineral fibres are commercially available.

A typical process of manufacture for continuous fibres comprises, for instance, melting appropriate components to obtain a mineral melt which is flown through a bushing which is a block of metal with precisely drilled holes to allow the melt to run through and then through individual bushing tips and orifices having appropriate diameters. The melt is then rapidly quenched and attenuated, for instance in air and water, to prevent crystallization, forming fine fibres. The fibres may be pulled by mechanical winders over an applicator which coats the fibre with a liquid mixture of chemicals, often aqueous, called a "sizing". In most cases the strands are wound onto a "forming cake" which is cured in an oven to drive off the moisture in the size. To produce a twisted yarn, the forming cake is unwound, twisted and wound onto a bobbin. To produce a multi-end roving package, several forming cakes are simultaneously unwound, then wound again onto a new package e.g. with typically 5 to 30 ends of strand.

The chopped continuous mineral fibres to be used in the present invention are man-made vitreous fibres (MMVF) which are also well known to those skilled in the art. More general information on these mineral fibres may be found e.g. in "Man-made Vitreous Fibres: Nomenclature, Chemical and Physical properties" by the Nomenclature Committee of TIMA Inc. (Revision 2, March 1, 1993). Chopped continuous man-made vitreous mineral fibres can be prepared according to known procedures as discussed above and are commercially available.

The composition of the chopped continuous man-made vitreous mineral fibres comprises the following components, based on the total weight of the composition: 54.0 to 64.0 % by weight of SiO₂; 9.0 to 27.0 % by weight of Al₂O₃, preferably 10.0 to 27.0 % by weight; 10.0 to 29.0 % by weight of CaO + MgO; 0 to 4.0 % by weight of Na₂O + K₂O; 0 to less than 2 % by weight of B₂O₃. The friction material may contain one or more of said chopped continuous man-made vitreous mineral fibres.

As is usual in the art, the analysis of the composition of such mineral fibres is measured as weight of oxides, where applicable. The composition of the chopped continuous mineral fibres may also contain other components as a balance. Examples of such further components are TiO₂, Fe₂O₃, ZnO, MnO, ZrO₂, B₂O₃, Li₂O, BaO, CsO, SO₃, F₂, and P₂O₅. The total content of other components in the composition of the chopped continuous mineral fibres as a balance may vary within wide ranges, e.g. from 0 to 30 % by weight, preferably from 0 to 15 % by weight and more preferably from 0 to 10 % by weight, based on the total weight of the composition. As is known to the skilled person, such compositions may contain amounts or trace amounts of certain components as impurities, i.e. components which are not intentionally added to the composition but which may be included in the raw materials used for the preparation of the composition as contamination. For instance, mineral raw materials are often "contaminated" with Fe.

It is however preferred that the mineral fibres used are free of boron or have a low boron content. In particular, the composition thereof comprises 0 to less than 2% by weight of B₂O₃, preferably 0 to less than 1% by weight of B₂O₃, based on the total weight of the composition. This is because boron generally lowers the high temperature resistance of the fibers.

The chopped continuous man-made vitreous mineral fibres used according to the invention are in particular high temperature resistant mineral fibres, wherein high temperature resistant mineral fibres refer to mineral fibres having a softening point higher than 870°C, more preferably higher than 900°C. The softening point as referred to in the present application can be determined using DIN ISO 7884-6 (determination of the softening point). The softening point is a property of the composition from which the fibres are made.

It is preferred that the chopped continuous man-made vitreous mineral fibres used according to the invention are either Ca-rich mineral fibres or Mg-rich mineral fibres, Ca-rich mineral fibres being particularly preferred. Ca-rich mineral fibres are mineral fibres having a composition comprising 16.0 to 25.0 % by weight of CaO and 0 to 4.0 % by weight of MgO, based on the total weight of the composition, whereas Mg-rich mineral fibres are mineral fibres having a composition containing 11.0 to 16.0 % by weight of MgO and 0 to 4.0, preferably 0 to 1.0 % by weight of CaO, based on the total weight of the composition.

Preferred chopped continuous mineral fibres used according to the invention have compositions comprising the following components, based on the total weight of the composition, all of which may additionally contain 0 to less than 2 % by weight, preferably 0 to less than 1 % by weight, of B₂O₃:

Composition A: 54.0 to 63.0 % by weight of SiO₂; 10.0 to 20.0 % by weight of Al₂O₃; 16.0 to 25.0 % by weight of CaO; 0 to 4.0 % by weight of MgO; 0 to 4.0 % by weight of TiO_{2;} 0 to 4.0 % by weight of Na₂O + K₂O; 0 to 0.8 % by weight of Fe₂O₃; 0 to 0.5 % by weight of SO₃; 0 to 0.5 % by weight of F₂.

Composition B: 54.0 to 62.0 % by weight of SiO₂; 9.0 to 15.0 % by weight of Al₂O₃; 17.0 to 25.0 % by weight of CaO; 0 to 4.0 % by weight of MgO; 0 to 4.0 % by weight of TiO_{2;} 0 to 4.0 % by weight of Na₂O + K₂O; 0 to 0.8 % by weight of Fe₂O₃; 2.0 to 5.0 % by weight of ZnO.

Composition C: 55.0 to 60.0 % by weight of SiO₂; 24.0 to 27.0 % by weight of Al₂O₃; 11.0 to 16.0 % by weight of MgO, 0 to 4.0 % by weight of Na₂O + K₂O.

Particularly preferred chopped continuous mineral fibres used according to the invention have a composition comprising the following components, based on the total weight of the composition: 56.0 to 62.0 % by weight of SiO₂; 11.0 to 20.0 % by weight of Al₂O₃; 20.0 to 25.0 % by weight of CaO; 0.2 to 4.0 % by weight of MgO; 0 to 4.0 % by weight of TiO_{2;} 0.05 to 2.0 % by weight of Na₂O; 0 to 2.0 % by weight of K₂O; 0 to 0.5 % by weight of Fe₂O₃; 0 to 0.5 % by weight of SO₃; 0 to 0.5 % by weight of F₂.

Preferred embodiments of chopped continuous mineral fibres to be incorporated into the friction material are discussed in the following. Chopped continuous mineral fibres to be incorporated into the friction material refer to mineral fibres before they are added to the friction material formulation to obtain the friction material. This is because the measurement of parameters of the mineral fibres within the friction material is often much more difficult and the compounding procedure of the mineral fibres to be mixed with the friction material formulation may affect such parameters to some extent. For instance, the incorporation of the mineral fibres in the friction material formulation is usually a compounding process so that the mineral fibres are subject to mechanical load which may result to some comminution of the fibres reducing the fibre length. However, the parameter ranges indicated below for the chopped continuous mineral fibres to be incorporated into the friction material may also apply to the mineral fibres within the friction material obtained, unless otherwise stated.

The chopped continuous mineral fibres to be incorporated into the friction material may be loose chopped continuous mineral fibres or chopped continuous mineral fibre strands. It is preferred that the chopped continuous mineral fibres are chopped continuous mineral fibre strands. The chopped continuous mineral fibres contained in the friction material are also preferably chopped continuous mineral fibre strands.

The length and the diameter of the chopped continuous mineral fibres to be incorporated into the fiction material may vary within wide ranges. The fibre length and the fibre diameter as used in this application refer to the number weight mean length and number weight mean diameter, respectively. The diameter and the length of the fibres can be e.g. measured automatically using a microscope with camera and image analyzing software as is known to the skilled person.

It has been shown that if the fibre length is too low, reinforcement properties are deteriorated. If the fibre length is too high, friction material processing problems may be caused and the friction material obtained may be inhomogeneous. Therefore, the fibre length of the chopped continuous mineral fibres to be incorporated into the friction material is preferably in the range of 1 to 25 mm, more preferably in the range of 4 to 10 mm. If the fibre diameter is too low, production is difficult. If the fibre diameter is too high, reinforcement properties are deteriorated. Therefore, the fibre diameter of the chopped continuous mineral fibres to be incorporated into the friction material is preferably in the range of 5 to 50 microns, more preferably in the range of 10 to 20 microns.

When the preferred chopped continuous mineral fibre strands are used, it has been surprisingly established that both a too low linear density and a too high linear density reduce reinforcement properties of the fibres. Therefore, it is preferred that the chopped continuous mineral fibre strands to be incorporated into the friction material have a linear density in the range of 30 to 1000 tex, preferably in the range of 50 to 400 tex. The linear density unit tex corresponds to the unit g/km.

It is known that chopped continuous mineral fibres may be treated with a size formulation which is usually a liquid and may contain several compounds such as film formers, lubricants, emulsifiers, coupling agents and/or other additives so that the size formulation is applied on the mineral fibres. For instance, mineral fibres treated with such formulation may be obtained by applying the size on the mineral fibres, e.g. immediately after the fibres have been generated, and drying to remove moisture of the size. Such treated chopped continuous mineral fibres may be used in the present invention, in particular chopped continuous mineral fibre strands having a sizing are preferred.

When the preferred chopped continuous mineral fibre strands are used in the present invention, it is preferred that said fibre strands have been treated with a sizing agent. It has been shown that a too low sizing content can cause processing problems in that the bonding between the single fibres is too low. A too low sizing content will also reduce the reinforcement character of the fibres. On the other hand, it has been shown that a too high sizing content will reduce the high temperature resistance of the fibres and decreases the actual amount of fibrous material of the product. Therefore, it is preferred that the chopped continuous mineral fibre strands to be incorporated into the friction material have a sizing content in the range of 0.5 to 10.0 % by weight, preferably 1 to 3 % by weight, based on the total weight of the fibre strands

The content of the chopped continuous mineral fibre in the friction material may vary within wide ranges. The friction material preferably contains said chopped continuous mineral fibres in an amount of from 1 to 30 % by volume, preferably in an amount of from 4 to 15 % by volume, based on the total volume of the friction material. Apart from said chopped continuous mineral fibres, the friction material may also contain other reinforcement fibres as discussed below.

The friction material can be obtained from a friction material formulation which refers to a mixture of components used for preparing the friction material which include the chopped continuous mineral fibres. The chopped continuous mineral fibres are incorporated into the friction material formulation e.g. by a usual mixing or compounding process. The order of mixing the components of the friction material formulation and the chopped continuous mineral fibres is not restricted. That is, the chopped continuous mineral fibres may be e.g. added to the binding agent of the friction material and mixed, and at the same time or subsequently other components of the friction material formulation such as further reinforcing fibres, fillers or frictional additives may be added. Any other order is also possible. It may however be advantageous to add the chopped continuous mineral fibres to a pre-mix of all or most of the other components of the friction material composition in order to minimize the mechanical load. The friction material formulation may contain a solvent in order to adjust the viscosity or to facilitate compounding.

The friction material refers to the product obtained after forming and hardening the friction material formulation in which the chopped continuous mineral fibres have been incorporated and includes also those products wherein the friction material was subjected to an after-treatment such as scorching, cutting, polishing, and gluing on substrates. The hardening may be a simple hardening or solidification, e.g. by solvent removal from the formulation or cooling. Preferably the friction material formulation is hardened by curing the friction material formulation or the binding agent, respectively.

Any friction material formulation known in the art may be used for the present invention. As mentioned above, the friction materials may vary with respect to constituents used and the relative amounts thereof depending on the desired properties of the friction material and the friction material system used. However, the friction material usually comprises a binding agent which holds the components of the friction material together (matrix forming component), and reinforcing fibres which provide for mechanical strength. In the majority of cases, the friction material also comprises at least one of fillers which reduce the cost and may improve processability, and frictional additives such as abrasives or lubricants which determine the frictional properties of the friction material. Examples of suitable components for the friction material according to the present invention are discussed in the following. These components are usual components in the field of friction materials.

The friction material formulation usually comprises one or more binding agents. After hardening, preferably curing, the binding agents in the friction material maintain the structural integrity under mechanical and thermal stress. The binding agent forms the matrix in which the other components are embedded.

The binding agent may be organic or inorganic but usually and preferably an organic binding agent is used. Thermosetting and thermoplastic binding agents may be employed, thermosetting binding agents being preferred. Examples of suitable binding agents for the friction material are phenolic resins including phenolformaldehyde resins, e.g. novolac resins, so-called COPNA resins (condensed polynuclear aromatic resins), silicone-modified resins also referred to as phenolic siloxane resins which are reaction products of silicone oil or silicone rubber and phenolic resins, cyanate ester resins, epoxy-modified resins, such as epoxy-modified phenolic resins, epoxy resins in combination with specific curing agents such as anhydrides, polyimide resins, e.g. a product of a fluoro resin and calcium carbonate.

The friction material preferably comprises a thermoset resin as a binding agent. Preferred binding agents are phenolic based resins, in particular phenol-formaldehyde resins. When using phenolic resins, these are often modified with tougheners such as epoxy resin or filled with wood flour. COPNA resins are often used in combination with graphite.

As stated, the friction material of the invention contains chopped continuous mineral fibres as reinforcing fibres. In addition, the friction material may comprise one or more other reinforcing fibres. In a friction material typically a mixture of different types of reinforcing fibres with complementing properties are used. Examples for such other reinforcing fibres are glass fibres, other mineral fibres, metallic fibres, carbon fibres, aramid fibres, potassium titanate fibres, sepiolite fibres and ceramic fibres. Metallic components for reinforcement may also have a shape other than a fibre shape. As is usual in the art, in the present application all metallic components included in the friction material are considered as metallic reinforcing fibres whatever the shape thereof is (fibre, chips, wool, etc.). Examples of metallic fibres include steel, brass and copper. Steel fibres often suffer from the drawback of rusting. An example of aramid fibres are Kevlar fibres. Ceramic fibres are typically made of metal oxides such as alumina or carbides such as silicon carbide.

The friction material may comprise one or more fillers as is common for known friction materials. The fillers may be organic or inorganic. Examples of common fillers are barium sulfate, calcium carbonate, mica, vermiculite, alkali metal titanates, molybdenum trioxide, cashew dust, and rubber dust. Further examples are sillimanite, mullite, magnesium oxide, silica, and iron oxide. The fillers sometimes play also a role in modifying certain characteristics of the friction material, e.g. enhancement of heat stability or noise reduction. Therefore, the specific filler to be used depends on the other constituents of the friction material. Mica, vermiculite, cashew dust, and rubber dust are known as noise suppressors.

The friction material may also comprise one or more frictional additives in order to modify the friction coefficient as well as the wear rate as is common for known friction materials. They are divided in two main categories: lubricants which decrease friction coefficients and wear rates and abrasives which increase friction coefficients and wear rates. Examples of typical lubricants are graphite and metal sulfides such as antimony sulfide, tin sulfide, copper sulfide and lead sulfide. There are many different abrasives having differing hardness ranging from mild abrasives such as quartz to alumina having a high hardness. Abrasives typically have Mohs hardness values of around 7 to 8. Examples of abrasives are metal oxide abrasives and silicates abrasives, e.g. quartz, zirconium silicate, zirconium oxide, aluminium oxide and chromium oxide.

The friction material formulation may also comprise other additives which are known in the art, for instance curing agents or crosslinkers for curing the binding agent, if necessary, or solvents, e.g. as a carrier for the binding agent or to adjust the viscosity of the formulation.

It is preferred that the friction material comprises one or more binding agents, one or more reinforcing fibers, one or more fillers and one or more friction additives selected from abrasives and/or lubricants. As mentioned above, the binding agent is generally in a hardened, cured or crosslinked state in the friction material. As further mentioned, the friction material contains at least the chopped continuous mineral fibres as defined according to the present invention as reinforcing fibres but may comprise one or more other reinforcing fibres. It is usually preferred that at least one other reinforcing fibre is contained in the friction material.

The content of the components in the friction material may vary in wide ranges. In a preferred embodiment the friction material comprises, based on the total volume of the friction material, from 5 to 45 % by volume of one or more binding agents, from 1 to 70 % by volume of one or more reinforcing fibers, from 5 to 80 % by volume of one or more fillers and from 1 to 35 % by volume of one or more friction additives selected from abrasives and/or lubricants. The range indicated for the one and more reinforcing fibers includes the chopped continuous mineral fibres as defined according to the present invention and optionally one or more further reinforcing fibres, which differ from the chopped continuous mineral fibres as defined according to the present invention.

As mentioned, the specific formulation of friction materials may vary with respect to constituents used depending on the desired properties of the friction material. Friction materials can be roughly divided into metallic, semi-metallic, low-steel, and non-asbestos organic, NAO/non-steel (also called "ceramic") friction materials depending on the metal content. A metallic friction material is predominantly metallic. Semi-metallic friction materials typically include about 30 to 65 vol.% of metallic components. Low-steel friction materials typically include about 5 to 25 vol.% of metallic components. Non-asbestos organic materials are free of asbestos. NAO/non-steel or ceramic friction materials are free of steel components.

Worldwide, there are essentially three formulation concepts or formulation 'families' used to manufacture disk pads: semi-metallic (see e.g. US-A-3835118, although the patent refers to a lining application, the formulation is typical for semi-metallic disk pads), low-steel (see e.g. EP-A-1138972) and NAO/non-steel (see e.g. US-A-20090785, also called 'ceramic'). As disk pads or brake pads are a preferred application for the friction materials according to the invention, the friction materials of the present invention are preferably semi-metallic, low-steel or NAO/non-steel or ceramic formulations. The chopped continuous mineral fibres according to the present invention are also suitable for noise reduction in other friction applications such as passenger car and commercial vehicle linings, industrial friction materials, railway blocks, railway pads, friction papers and clutches.

The components of the friction material formulation including the chopped continuous mineral fibres may be mixed using common friction material mixing techniques. The components may be mixed together in a dry or wet form. The friction material formulation is then usually formed to the desired shape in a known manner, e.g. by moulding or pressing in a mould. The forming procedure may be carried out with or without heating. After or during forming, the friction material formulation is preferably hardened, more preferably cured to obtain the friction material. Curing is also effected in the usual manner, e.g. by heating the formulation, for instance in a curing oven.

The friction materials of the present invention may be used for all applications in which known friction materials are used, in particular for brake or clutch devices. The friction material of the invention is particularly suitable for high temperature applications such as brake or disk pads. The friction materials of the present invention are, for instance, useful as brake pads or disk pads, brake shoes, brake linings, friction plates and clutch facings, wherein it is particularly preferred that the friction material is a brake pad or disk pad. The friction material can be employed, for instance, in industrial machines and transport systems or vehicles such as lifts, passenger cars, motorcycles, bicycles, trucks, railway vehicles, aircrafts, baggage cars and cable cars. The preferred application for the friction material according to the present invention is disk pads.

Surprisingly, the chopped continuous mineral fibres used according to the invention have a pronounced positive effect on the noise performance of a friction material. Therefore, the use of chopped continuous mineral fibres as reinforcing fibres in a friction material, wherein the mineral fibres are man-made vitreous fibers and the composition of the mineral fibres comprises the following components, based on the total weight of the composition: 54.0 to 64.0 % by weight of SiO₂; 9.0 to 27.0 % by weight of Al₂O₃; 10.0 to 29.0 % by weight of CaO + MgO; 0 to 4.0 % by weight of Na₂O + K₂O; 0 to less than 2 % by weight of B₂O₃, is advantageous. The use of said mineral fibers in a friction material also enhances the wear performance and reduces corrosiveness of the friction material. The use of said mineral fibres in a friction material which is a brake pad or a disk pad is particularly preferred.

The present invention will be further illustrated by the following examples which are however not intended to limit the scope of the invention in any way.

### Example

In a conventional friction formulation conventional fibres made of alumina-calcium-borosilicate glass (E-glass) having a softening point in the range of 830 to 860°C, or high temperature resistant chopped continuous mineral fibres are added as reinforcing fibers. The composition of the high temperature resistant chopped continuous mineral fibres used is free of boron and comprises, in % by weight and based on the total composition: 56 to 62 of SiO₂; 11 to 20 of Al₂O₃; 20 to 24.5 of CaO; 0.2 to 1.0 of MgO; and 0 to 10 of other components. The friction material obtained from the formulation containing E-glass fibres (chopped continuous fibres) and the friction material obtained from the formulation containing the high temperature resistant mineral fibres (chopped continuous fibres) of the present invention were compared.

The inventive high temperature resistant mineral fibres used were chopped continuous man-made vitreous mineral fibre strands having a softening point of more than 870°C, a fibre diameter of 13 microns, a linear density of 300 tex [the linear density "tex" definition is: g/km], 1.5 % by weight sizing, and a fibre length of 6 mm.

The evaluation took place in a disk pad formulation containing 4 vol.% of said chopped continuous fibres (E-glass fibre or high temperature resistant mineral fibre). The components of the friction formulation were compounded and hardened with each other in a usual manner to obtain the friction material. Friction evaluation was performed externally on a dynamometer using test procedure SAE J2521. Test method for the impact strength was ISO 148-1.

The test results are summarized in the following table. The tested friction formulation had the following composition (in vol.%):

| | |
|---|---|
| Phenolic resin | 15-20 |
| Rubber dust | 10-15 |
| Cashew dust | 10-15 |
| Further fillers | 20-30 |
| Mica | 4-8 |
| Mineral fibres | 5-15 |
| Chopped continuous fibres | 4 |
| Aram id | 1-5 |
| Graphite | 6-12 |

**Table. Test results for friction materials**

| | Comparative Example | Example |
|---|---|---|
| | Friction material containing E-glass fibre | Friction material containing high temperature resistant mineral fibre |
| Noise occurrence > 70 dB(A) (%) | 4,4 | 2,1 |
| Pad wear [gram] | 22 | 18 |
| Rotor wear [gram] | 13 | 11 |
| Impact strength [kJ/m2] | 2,3±0,3 | 4,0±0,5 |
| Average coefficient of friction (µ) | 0,40 | 0,40 |
| Peak coefficient of friction (µ) | 0,61 | 0,55 |

As can be seen, advantages are achieved with respect to noise occurrence, pad wear, rotor wear, impact strength, peak friction level when comparing to an embodiment using E-glass in a brake pad. Most significant is the reduction in brake noise, but also the improvement in pad and rotor wear is important. Furthermore the lower variation in friction level is beneficial just as the higher mechanical reinforcement.

## Claims

1. A friction material comprising chopped continuous mineral fibres as reinforcing fibers **characterized in that** the mineral fibres are man-made vitreous fibres and the composition of the mineral fibres comprises the following components, based on the total weight of the composition: 54.0 to 64.0 % by weight of SiO₂; 9.0 to 27.0 % by weight of Al₂O₃; 10.0 to 29.0 % by weight of CaO + MgO; 0 to 4.0 % by weight of Na₂O + K₂O; 0 to less than 2 % by weight of B₂O₃.

2. The friction material according to claim 1, wherein the mineral fibers are high temperature resistant mineral fibres with a softening point higher than 870°C, more preferably higher than 900°C.

3. The friction material according to claim 1 or 2, wherein the mineral fibers are Ca-rich mineral fibres, wherein the composition of the Ca-rich mineral fibres comprises the following components, based on the total weight of the composition: 54.0 to 63.0 % by weight of SiO₂; 10.0 to 20.0 % by weight of Al₂O₃; 16.0 to 25.0 % by weight of CaO; 0 to 4.0 % by weight of MgO; 0 to 4.0 % by weight of TiO_{2;} 0 to 4.0 % by weight of Na₂O + K₂O; 0 to 0.8 % by weight of Fe₂O₃; 0 to 0.5 % by weight of SO₃; 0 to 0.5 % by weight of F₂.

4. The friction material according to claim 3, wherein the composition comprises the following components, based on the total weight of the composition: 56.0 to 62.0 % by weight of SiO₂; 11.0 to 20.0 % by weight of Al₂O₃; 20.0 to 25.0 % by weight of CaO; 0.2 to 4.0 % by weight of MgO; 0 to 4.0 % by weight of TiO_{2;} 0.05 to 2.0 % by weight of Na₂O; 0 to 2.0 % by weight of K₂O; 0 to 0.5 % by weight of Fe₂O₃; 0 to 0.5 % by weight of SO₃; 0 to 0.5 % by weight of F₂.

5. The friction material according to claim 1 or 2, wherein the mineral fibers are Ca-rich mineral fibres, wherein the composition of the Ca-rich mineral fibres comprises the following components, based on the total weight of the composition: 54.0 to 62.0 % by weight of SiO₂; 9.0 to 15.0 % by weight of Al₂O₃; 17.0 to 25.0 % by weight of CaO; 0 to 4.0 % by weight of MgO; 0 to 4.0 % by weight of TiO₂ 0 to 4.0 % by weight of Na₂O + K₂O; 0 to 0.8 % by weight of Fe₂O₃; 2.0 to 5.0 % by weight of ZnO.

6. The friction material according to claim 1 or 2, wherein the mineral fibers are Mg-rich mineral fibres and wherein the composition of the Mg-rich mineral fibres comprises the following components, based on the total weight of the composition: 55.0 to 60.0 % by weight of SiO₂; 24.0 to 27.0 % by weight of Al₂O₃; 11.0 to 16.0 % by weight of MgO, 0 to 4.0 % by weight of Na₂O + K₂O.

7. The friction material according to any one of claims 1 to 6, wherein the chopped continuous mineral fibres are chopped continuous mineral fibre strands.

8. The friction material according to any one of claims 1 to 7, wherein the composition of the mineral fibres comprises 0 to less than 1 % by weight of B₂O₃, based on the total weight of the composition.

9. The friction material according to any one of claims 1 to 8, wherein the friction material comprises from 1 to 30 % by volume, preferably from 4 to 15 % by volume of said mineral fibres, based on the total volume of the friction material.

10. The friction material according to any one of claims 1 to 9, wherein the friction material is a brake pad or a disk pad.

11. The friction material according to any one of claims 1 to 9, wherein the friction material is a brake shoe, a brake lining or a clutch facing.

12. The friction material according to any one of claims 1 to 11, wherein the chopped continuous mineral fibres to be incorporated into the friction material have a fibre length in the range of 1 to 25 mm, preferably in the range of 4 to 10 mm.

13. The friction material according to any one of claims 1 to 12, wherein the chopped continuous mineral fibres to be incorporated into the friction material have a fibre diameter in the range of 5 to 50 microns, preferably in the range of 10 to 20 microns.

14. The friction material according to any one of claims 7 to 13, wherein the chopped continuous mineral fibre strands to be incorporated into the friction material have a linear density in the range of 30 to 1000 tex, preferably 50 to 400 tex.

15. Use of chopped continuous mineral fibres as reinforcing fibres in a friction material, wherein the mineral fibres are man-made vitreous fibers and the composition of the mineral fibres comprises the following components, based on the total weight of the composition: 54.0 to 64.0 % by weight of SiO₂; 9.0 to 27.0 % by weight of Al₂O₃; 10.0 to 29.0 % by weight of CaO + MgO; 0 to 4.0 % by weight of Na₂O + K₂O; 0 to less than 2 % by weight of B₂O₃.

16. The use of mineral fibers according to claim 15 for improving the wear performance; for reducing the noise of a friction material in service; or for improving the wear performance and reducing the noise of a friction material in service.

17. The use of mineral fibers according to claim 15 or claim 16 for reducing the noise of a friction material in service, wherein the friction material is a brake pad or a disk pad.

18. The use of mineral fibers according to any one of claims 15 to 17 for reducing corrosiveness of the friction material.
